# EUROPÄISCHE PATENTANMELDUNG

(11) **EP 1 506 745 A1**
(43) Veröffentlichungstag der Anmeldung: **16.02.2005**
(21) Anmeldenummer: 03405597.0
(22) Anmeldetag: 15.08.2003
(51) Int. Cl.: A61C 13/00

(54) **Rohling und Verfahren zur Herstellung einer Zahnrestauration**

(71) Anmelder: Mörmann, Jeanette, 8053 Zürich (CH)
(72) Erfinder: Mörmann, Jeanette, 8053 Zürich (CH)
(74) Vertreter: Blum, Rudolf Emil Ernst

(57) **Zusammenfassung**

Ein Rohling zum Herstellen einer Zahnrestauration besitzt einen Block (10) aus mechanisch bearbeitbarem Material und einen mit dem Block (10) verbundenen Halter (11) zum Einspannen in ein automatisches Bearbeitungswerkzeug. Am Block (10) ist ein Implantat-Anschlussteil (14) angeordnet ist, in welchem eine Implantat-Fixtur zur Befestigung an einem Implantatkopf ausgeformt ist. Der Halter (11) ist an einer ersten Oberfläche (12) des Blocks (10) angeordnet und der Implantat-Anschlussteil an einer zweiten Oberfläche (13), die rechtwinklig zur ersten Oberfläche steht. Dadurch wird es möglich, den Rohling in konventionellen, computergesteuerten Bearbeitungswerkzeugen zu bearbeiten. Der Implantat-Anschlussteil (14) macht es möglich, den Restaurationskörper ohne Abutment direkt am Implantat zu befestigen.

## Beschreibung

Die Erfindung betrifft einen Rohling und ein Verfahren zur Herstellung einer Zahnrestauration sowie einen Teilesatz mit einem derartigen Rohling gemäss Oberbegriff der unabhängigen Ansprüche. Insbesondere beschreibt das Verfahren die Herstellung von Zahnkronen mittels CAD/CAM, CAM oder Kopierschleifvorrichtungen als prothetische Suprastruktur für Zahnimplantate unter Verwendung von Rohlingsblöcken aus restaurativem Material, die mit einem integrierten Implantat-Anschlussteil versehen sind, welcher eine implantat-typische Fixtur aufweist und den direkten Anschluss einer aus dem Block hergestellten Krone an den Kopf des Zahnimplantats erlaubt.

Die Herstellung von Zahnkronen zur Versorgung von Implantaten per Computerdesign erfolgt üblicherweise über den Zwischenschritt der Herstellung von prothetischen Aufbauten ("Implantat-Abutment") in Form eines Zahnstumpfes (Hegenbarth 1999, Implantologie 3: 297-307), dies in Analogie zur Herstellung von Kronen bei noch vorhandenen natürlichen Zähnen. Bei diesen präpariert der Zahnarzt die noch vorhandene Zahnhartsubstanz zu einer pfeilerartigen, im Wesentlichen der Zahnachse und einer Einschubachse folgenden, zur Kaufläche bzw. Okklusionsebene hin zirkulär konvergenten Stumpfform, die zur Aufnahme der künstlichen Vollkrone geeignet ist. Bei Zahnimplantaten können vorkommende Abweichungen der Achsrichtung gegenüber der Okklusionsebene von bis zu 20 Winkelgraden mittels Ausrichtung der Einschubachse des Implantat-Abutments ausgeglichen werden. Für die Herstellung von Implantat-Abutments und -Kronen ist die genaue Erfassung der Position des Implantats selbst und auch der den Implantatkopf umgebenden Gingiva von besonderer Wichtigkeit. Beide bestimmen die anatomisch korrekte Gestaltung des Implantat-Abutments im subgingivalen Bereich. Der Umriss der Krone im gingivalen Bereich soll dem der natürlichen Zahnwurzel gleichen. Der Übergang zur Krone (Emergenzprofil) orientiert sich ebenfalls am natürlichen Zahn, um eine natürliche Gingivakontur zu erzielen. Mit Hilfe eines "Guide-Pins" und eines mit einer Skala versehenen "T-Bars" wird die Implantatposition dreidimensional in den Rechner des Computers übertragen. Während der auf das Implantat aufgeschraubte "Guide-Pin" die oro-bukkale und mesio-distale Ausrichtung des Implantates darstellt, gibt der "T-Bar" die Höhenposition des Implantatkopfes im gingivalen Bereich des Modells wider. Damit ist die Achsenneigung und die Höhenposition des Implantatkopfes für das individuelle Design des "Abutments" bekannt (Hegenbarth 1999, Implantologie 3: 297-307). Dieses wird aus Titan oder Hochleistungskeramik gefertigt. Die dazu passende Krone wird mit zahntechnischen und computertechnischen Schritten hergestellt.

Das Cerec CAD/CAM System (Sirona Dental Systems, Bensheim, Deutschland), eignet sich zur Versorgung von Zähnen mit Vollkronen aus Keramik (Mörmann et al., ISBN 3-9521752-1-8). Bei der Kronenfertigung mit Cerec werden bisher die Implantate mit Hilfe von Standardabutments aus Titan oder Keramik aufgebaut. Ungünstige Achsneigungen von Zahnimplantaten können mit gewinkelten Standardabutments ausgeglichen werden. Alternativ können die Konvergenzwinkel und der gingivale Rand von Standardabutments aus Hochleistungskeramik (wie z.B. ZiReal von Implant Innovations Inc.) durch manuelles Beschleifen angepasst werden. Abutments mit geeigneter Stumpfrichtung und genügendem Konvergenzwinkel können sowohl mit der Cerec-3D Mundkamera als auch nach Abformung und Modellherstellung mit der Laserabtastung im Cerec inLabgerät aufgenommen werden. Die Konstruktion und Fertigung der Krone erfolgt dann auf dem Stumpf mit bekannten Schritten wie beim vitalen Zahn (Masek 2003, Int J Comp Dent 6: 75-82). Die Kronen werden in der Cerec 3-Schleifeinheit aus Rohlingsblöcken von beschleifbarem Restaurationsmaterial (Keramik) formgeschliffen (Mörmann & Bindl 2000, Quintessence Int 31:699-712; Mörmann & Bindl 2002, Dent Clin N Am 46: 405-426). In ähnlihcer Weise erfolgt dies in anderen bekannten System zur Herstellung von dentalen Restaurationen, wie z.B. der handgesteuerten Celay-Kopiertechnik (Crispin 1996, Quintessence, Chicago, Seite 68), der DCM/Cercon Technik (Filser et al., 2001, Int. J. Comp. Dent. 4: 89 - 106), der LAVA-Technik (Sutter et al. 2001, Int. J. Comp. Dent. 4: 195 - 206), der DCS-Technik (Besimo et al. 2001, Int. J. Comp. Dent. 4: 243 - 262), der GN-1 Technik (Hikita et al. 2002, Int. J. Comp. Dent. 5: 11 - 23). In jedem Fall verlangt die CAD/CAM Fertigung von Implantatkronen entsprechend der konventionellen Verfahrensweise die Herstellung eines achsengerechten Abutments, mit dem nachfolgenden Einsetzen und Befestigen der Krone.

In dem Bemühen, die Kronenversorgung von Zahnimplantaten zu vereinfachen, wurde vorgeschlagen, Implantatfixturen in Materialblöcken auszuformen und Abutments sowie Kronen mit Hilfe der CAD/CAM-Technologie (Abutments) herzustellen (De Luca 1999, EP 1 023 876 A2). Diese Lösung ist jedoch nicht ohne apparative Modifikationen bei herkömmlichen Bearbeitungssystemen z.B. der Cerec-Klasse einsetzbar.

Die Versorgung von Zahnimplantaten mit Abutment-Vollkronen stellt eine anspruchsvolle und zeitraubende Arbeit dar, die mit der vorliegenden Erfindung vereinfacht und verkürzt werden soll.

Diese Aufgabe wird von der in den unabhängigen Ansprüchen definierten Erfindung gelöst.

Erfindungsgemäss wird der Block also an mindestens einer ersten Oberfläche an einem Halter bzw. der Bearbeitungsvorrichtung befestigt. An einer zweiten Oberfläche des Blocks, die ungefähr senkrecht oder zumindest quer zur ersten Oberfläche bzw. zu den ersten Oberflächen steht, ist ein Implantat-Anschlussteil angeordnet, in welchem eine Implantat-Fixtur zur Befestigung des ausgebarbeiteten Kronenwerkstücks an einem Implantatkopf ausgeformt ist. Dabei sind die erste(n) und die zweite Oberfläche im wesentlichen rechtwinklig oder quer zueinander angeordnet. Somit kann die zweite Oberfläche (und die der zweiten Oberfläche gegenüberliegende Fläche) zumindest in einem mittleren Bereich für die Bearbeitungsinstrumente frei zugänglich bleiben (eine geringe Umfassung der Randbereiche der zweiten Fläche durch den Halter stört dabei nicht). Dies erlaubt es, die okklusale-gingivale Achse der herzustellenden Krone parallel zur ersten Oberfläche bzw. senkrecht zur Achse des Halters zu orientieren, wie dies auch bei der Bearbeitung konventioneller Rohlingsblöcke der Fall ist. Somit sind zur Bearbeitung der neuen Rohlinge nur minimale Änderungen der Verfahrensschritte und der Bearbeitungsvorrichtung erforderlich.

Die Implantat-Fixtur erlaubt es, Vollkronen direkt, unter Verzicht auf die Herstellung und Montage eines Abutments, auf den Kopf des inkorporierten Zahnimplantates zu konstruieren, in konventionellen automatischen oder handgesteuerten Bearbeitungsgeräten bzw. dentalen Kopierbearbeitungsgeräten formzuschleifen und im Mund lagegerecht direkt mit der Fixtur des Zahnimplantates zu befestigen.

Die Daten zum Formschleifen der Krone können beispielsweise durch optische Messung auf dem freiliegenden Kopf des Zahnimplantats direkt im Mund des Patienten (z.B. mit der CEREC-Kamera) gewonnenen werden oder durch Laserabtastung eines zahntechnisch hergestellten Modells dieser Situation (z.B. in den CEREC inLab, DCS oder GN-1-Verfahren). Im zweiten Fall kann mit Hilfe eines Übertragungsabutments ein stellvertretendes Implantat situationsgenau plaziert werden. Auf dieses wird eine stellvertretende Fixtur befestigt und die Krone situationsgerecht aufgewachst. Die aufgewachste Krone wird dann mit Hilfe der bekannten Lasertriangulation (DCM-Cercon, Lava, DCS, GN-1, CEREC inLab) samt der Fixtur räumlich abgetastet. Die Fixtur dient dabei als Referenz für die Orientierung des Datensatzes im Rohlingsblock. Sodann wird ein Rohlingsblock mit Implantat-Fixtur entsprechend diesen Daten formgeschliffen.

Vorzugsweise besteht der Implantat-Anschlussteil aus einem anderen Material als der Block, z.B. aus einem Material mit höherer Bruchfestigkeit, so dass Block und Anschlussteil je an die unterschiedlichen Anforderungen, denen sie gerecht werden müssen, angepasst werden können.

Denkbar ist jedoch auch, dass der Implantat-Anschlussteil und der Block aus dem gleichen Material bestehen und insbesondere einstückig ausgestaltet sind. In diesem Fall sollte ein Material mit hoher Bruchfestigkeit verwendet werden. Besonders vorteilhaft ist in diesem Zusammenhang Glaskeramik, insbesondere Lithiumsilikat-Keramik, oder ein anderes Material, dem nach der mechanischen Bearbeitung im CEREC-Gerät durch Nachbehandlung, insbesondere Tempern, d.h. Behandeln bei erhöhter Temperatur, eine höhere Festigkeit verliehen werden kann.

Die Erfindung betrifft auch einen Teilesatz zur Herstellung einer Zahnrestauration, insbesondere einer Zahnkrone, mit mindestens einem Rohling dieser Art.

Vorzugsweise wird die Position des Implantat-Anschlussteils ausgemessen und der Rohling so bearbeitet, dass die vorgegebene Restaurationsoberfläche relativ zur Position des Implantat-Anschlussteils gebildet wird. Durch diese Schritte wird sichergestellt, dass die Restaurationsoberfläche die korrekte Position zum Implantat-Anschlussteil und somit zum Implantat besitzt.

Weitere bevorzugte Ausführungen und Vorteile der Erfindung ergeben sich aus den abhängigen Ansprüchen sowie aus der nun folgenden Beschreibung anhand der Figuren. Dabei zeigen:
Fig. 1 die Seitenansicht einer Zahnreihe mit einem zu ersetzenden Zahn,
Fig. 2 eine Ansicht der Zahnreihe von Fig. 1 von oben,
Fig. 3 die Zahnreihe von Fig. 1 mit Übergangsabutment,
Fig. 4 die Zahnreihe von Fig. 3 von oben,
Fig. 5 einen Schnitt durch einen Rohling mit Halter,
Fig. 6 eine Ansicht des Rohlings von Fig. 5 von der Seite der Fixtur gesehen,
Fig. 7 den Rohling von Fig. 5 mit Referenzteil,
Fig. 8 den Rohling von Fig. 7 von der Seite des Referenzteils gesehen,
Fig. 9 die restaurierte Zahnreihe,
Fig. 10 eine zweite Ausführung eines Rohlings und
Fig. 11 ein zahntechnisch erstelltes Modell mit Aufwachs-Abutment, wobei letzteres im Schnitt dargestellt ist.

Im Folgenden wird eine Ausführung der Erfindung an einem Beispiel beschrieben. Dabei handelt es sich um die Restauration eines Backenzahns mit einer Krone.

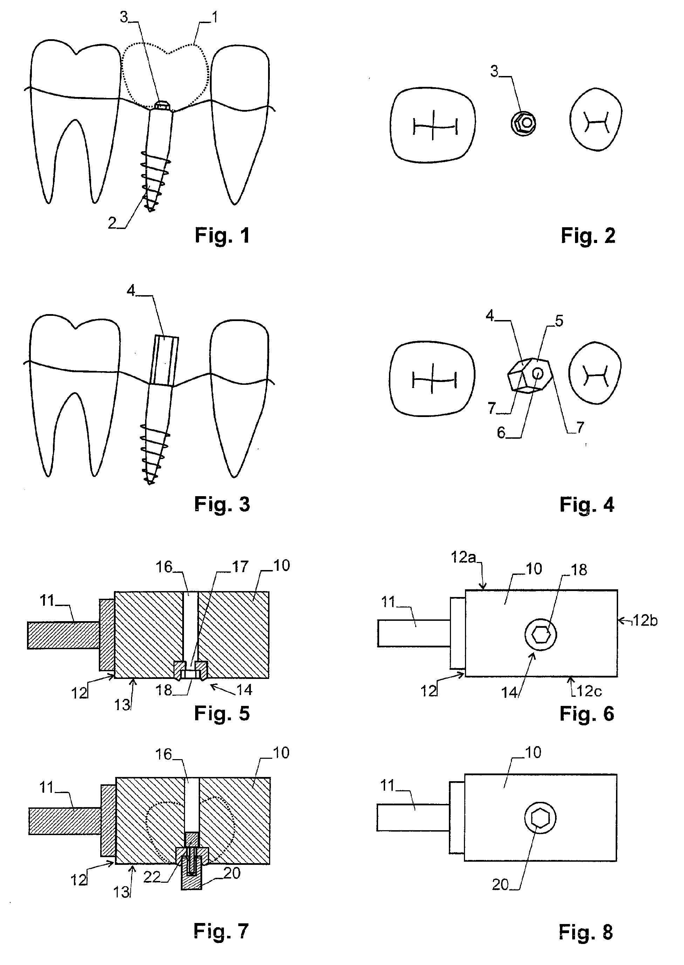

Fig. 1 und 2 zeigen eine Zahnreihe mit fehlendem Backenzahn 1, an dessen Position ein Zahnimplantat 2 im Kieferknochen verankert wurde. Der Implantatkopf 3 des Zahnimplantats 2 ist in bekannter Weise mit einem polygonalen Profil und einem Innengewinde versehen, die eine Fixtur bilden und zur Befestigung der Restauration dienen.

Die Situation des freiliegenden Implantatkopfes 3 wird dreidimensional vermessen. Hierzu wird die dreidimensionale Lage und Position des Implantatkopfes analog zur Zahntechnik unter Verwendung eines Hilfskörpers, im folgenden "Übertragungsabutment" 4 genannt, erfasst, wie es in Fig. 3 und 4 dargestellt ist. Das Übertragungsabutment 4 passt exakt auf die Fixtur des Implantatkopfes 3, und wird auf diesen zum exakten Sitz aufgeschraubt, so dass er in vorgegebener Lage zum Implantatkopf 3 steht. Das Übertragungsabutment 4 verlängert das intraossär liegende Zahnimplantat 2 in seiner Achsrichtung in den Bereich der klinischen Zahnkrone. Es besitzt prismatische Form mit vorzugsweise hexagonalem oder oktagonalem Querschnitt, je nach Fixturgeometrie. Seine Seitenflächen enden okklusal in einer Fläche 5, welche durch eine Bohrung 6 für die zentrale Befestigungsschraube unterbrochen wird. Die okklusale Fläche 5 des Übertragungsabutments 4 repräsentiert die räumliche Form und Lage des Implantatkopfes im gingivo-zervikalen Bereich mit dem Abstand, der durch die Höhe des Übertragungsabutments 4 definiert wird. Sie informiert auch über die Winkelabweichung der Fixtur des Implantats gegenüber der Kauflächen-(Okklusions) Ebene. Das Übertragungsabutment 4 besitzt für die optisch-dreidimensionale Messtechnik geeignete opake Oberflächen und liegt mit der okklusalen Fläche im Fokus- und Messbereich des Messsystems. Bei der oralen optisch-dreidimensionalen Vermessung mit der Cerec-3D Mundkamera werden Gingiva und Nachbarzähne mit einem opaken Puder bzw. Spray eingedeckt.

Nebst der Messung der Position und Lage des Implantats 2 werden auch die Grösse und Form der Zahnlükke sowie die Lagen der Nachbarzähne in bekannter Weise ausgemessen.

Die Ermittlung der Kronenform erfolgt beispielsweise mit der Software des oben erwähnten CEREC-Systems, welche die das Verfahren kennzeichnenden Modifikationen enthält. Dabei wird die vom Messsystem aufgenommene Situation am Bildschirm dargestellt und der Benutzer markiert relevante Punkte und Linien. Ausgangspunkt ist die gemessene und abgespeicherte Form, Position und Lage des Implantatkopfes 3. Der Benutzer identifiziert in einem ersten Schritt im virtuellen Modell des Zahn- bzw. Kieferbereichs den äusseren Rand der okklusalen hexaoder oktagonalen Fläche 5 des Übertragungsabutments 4 mit einer Linie und zusätzlich die der mesio-distalen Zahnreihenachse nächstliegenden mesialen und distalen Ecken 7 durch Punkteingaben. Die gerade Verbindungslinie dieser Punkte 7 durch den Mittelpunkt markiert die Winkellage der Implantatfixtur bezüglich der mesio-distalen Zahnreihenachse. Das System erfährt durch diese Eingaben die Winkelabweichung der Implantatfixtur gegenüber der mesio-distalen Zahnreihenachse sowie seine mesio-distale und oro-bukkale Raumorientierung. Die mesio-distale Zahnreihenachse stellt zusammen mit der Okklusionsebene die Hauptachse für die Konstruktion der Krone dar. Die gespeicherten räumlichen Daten des Implantatkopfes werden mit Hilfe der räumlichen Identifikation durch das Übertragungsabutment im dreidimensionalen Datenmodell der gingivo-zervikalen Lage zugeordnet.

Zum Ermitteln der Kronenform wird im ersten Schritt die äussere Zirkumferenz des Implantatkopfes 3 mit der Eingabe einer zirkulär geschlossenen Bodenlinie markiert. Im zweiten Schritt wird die zervikale Kronenumrisslinie dem Verlauf des Gingivarandes folgend eingegeben. Die Höhendaten der Bodenlinie werden aus dem Höhenverlauf der Gingiva übernommen. Die Linie ist editierbar. Zwischen dem äusseren Rand des Implantatkopfes 3 und der zervikalen Kronenumrisslinie werden die subgingivalen Oberflächen der Krone generiert. Auf den gingivalen Rand der Krone wird eine virtuelle Krone des zutreffenden Zahntyps aus einer Zahndatenbank angepasst, oder es wird ein Registrat der Situation vor Zahnverlust verwendet. Das Emergenzprofil der bukkalen, lingualen und approximalen Kronenoberflächen kann im Bereich der zervikalen Kronenumrisslinie mit einem koronalen Austrittswinkel bestimmt werden. Die mesio-distale, approximale und okklusale Ausrichtung und Anpassung der Kronenform erfolgt mit den Werkzeugen der verfügbaren Kronensoftware. Für das maschinelle Formschleifen der Implantatkrone werden die Konstruktionsdaten in Schleifdaten umgewandelt.

Sodann wird ein Rohling bearbeitet, wie er in Fig. 5 und 6 dargestellt ist. Dieser besitzt einen Rohlingsblock bzw. Block 10, der beispielsweise aus einem keramischen Material oder Komposit besteht, und einen Halter 11, der zur Halterung in einem computergesteuerten Bearbeitungswerkzeug dient. Der Halter 11 ist mit einer ersten Oberfläche 12 des Blocks 10 verbunden, z.B. durch Kleben. Rohlinge dieser Art sind z.B. aus US 4 615 678 bekannt.

An einer zweiten Oberfläche 13, die rechtwinklig zur ersten Oberfläche 12 des Blocks 10 steht, ist ein Implantat-Anschlussteil 14 angeordnet. Es handelt sich dabei um ein implantatspezifisches Präzisionsteil aus Material mit hoher Bruchfestigkeit, welches einen präzisen Sitz der Krone auf dem Implantatkopf 3 gewährleistet und die feste Verschraubung mit diesem erlaubt. Das Implantat-Anschlussteil 14 ist fest mit dem Block 10 verbunden. Der Block 10 weist einen zentralen Kanal 16 auf, der sich vom Implantat-Anschlussteil 14 quer durch den Block 10 erstreckt. Der Kanal 16 verläuft durch die Mitte des Blocks 10 und parallel zur ersten Oberfläche 12. Er nimmt eine Befestigungsschraube 12 auf und ermöglicht den Zugang zur Schraube 12 mittels Schraubenzieher, so dass der Anschlussteil 14 samt formgeschliffener Krone mit dem Implantat verschraubt werden kann. Der Implantat-Anschlussteil 14 ist mit seiner Umfangsebene planparallel zur zweiten Oberfläche 13 des Blocks 10 angeordnet. Die Anordnung der Fixturgeometrie des Anschlussteiles 14 befindet sich gegenüber der Geometrie des Blocks 10 in einer standardisierten Anordnung.

Der Implantat-Anschlussteil 14 besteht z.B. aus Metall oder einer bruchfesten Keramik, da er hohe Kräfte aufnehmen muss. Er ist teilweise im Block 10 versenkt und kann, wie dargestellt, teilweise über die Oberfläche 13 herausstehen. Wenn der Implantat-Anschlussteil über die Oberfläche 13 heraussteht, muss beim Formschleifen der Krone weniger Material abgetragen werden.

Der Implantat-Anschlussteil 14 besitzt eine achsiale Öffnung 17 für den Schaft der Befestigungsschraube 12 und einen als Fixtur dienenden polygonalen Sitz 18, welcher der Form des Implantatkopfs 3 angepasst ist.

Für das Formschleifen der Krone im Bearbeitungswerkzeug ist die Identifikation der Lage des Implantat-Anschlussteiles 14 im Block 10 wichtig. Dies geschieht mit Hilfe eines Referenzteils 20 in Form eines Materialkörpers, wie er in Fig. 7 und 8 dargestellt ist. Der Referenzteil 20 wird mit dem Implantat-Anschlussteil 14 verbunden und vom Bearbeitungswerkzeug direkt zur Identifikation seiner Position angefahren. Die Form und Grösse des Referenzteils 20 ist in der Maschine gespeichert. Die Identifikation geschieht z.B. durch Touchierungen auf gegenüberliegenden achsialen Seiten und auf der Endfläche oder durch optische Abtastung. Wenn der Implantat-Anschlussteil 14 ausreichend weit über die zweite Fläche 13 des Blocks 10 vorsteht, kann dessen Position unter Umständen auch ohne einen speziellen Referenzteil direkt ausgemessen werden. Es ist auch möglich, die Position des Kanals 16 auszumessen. Ist die Position des Implantat-Anschlussteils relativ zum Halter 11 genau bekannt, so genügt unter Umständen eine Ausmessung der Position des Halters.

Die aus dem Block 10 zu schleifende Kronenkonstruktion wird gemäss ihrer Anbindung an das Implantat-Anschlussteil 14 im Block 10 orientiert. Bei Kippungen des Implantatkopfes 3 gegenüber der Okklusionsebene wird die gesamte Kronenkonstruktion gemäss diesen im Rohlingsblock ausgerichtet. Unterhalb von 15-20 Winkelgraden können sie durch die Wahl des Aufnahme-Winkels, die Orientierung des virtuellen Zahnreihenmodelles und auch durch die Toleranz der Schleifanordnung kompensiert werden, insbesondere da der bei konventionellen Kronen nötige Innenschliff zur Aufnahme des Abutments entfällt. Bei Verkippungen wandert die Öffnung des Zugangskanals für die Schraubenbefestigung der Krone aus dem Zentrum der Kaufläche.

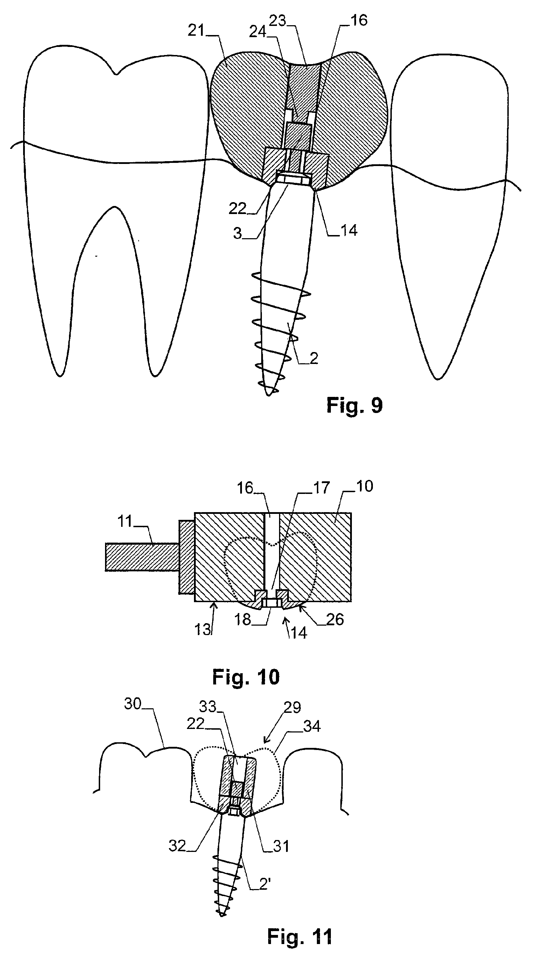

Nach der Bestimmung der Position des Implantat-Anschlussteiles 14 wird in an sich bekannter Weise eine Krone 21 formgeschliffen. Diese kann, wie in Fig. 9 dargestellt, sodann auf dem Implantatkopf 3 befestigt werden, indem die Befestigungsschraube 22 in den Kanal 16 eingeführt und im Implantat 2 verschraubt wird. Sodann wird der Kanal 16, der z.B. einen Durchmesser von 2.5 mm besitzt, verschlossen. Hierzu kann plastisches Zahnrestaurationsmaterial oder ein Verschlusszapfen 23 verwendet werden. Letzterer besteht vorzugsweise aus dem gleichen Material wie Block 10, ist in seinem Durchmesser dem Kanal 16 angepasst und wird im Kanal 16 eingeklebt und an der okklusalen Oberfläche abgeschliffen. Wird ein Verschlusszapfen 23 verwendet, so reicht dieser in seiner vollen Dicke vorzugsweise nicht ganz bis zur Befestigungsschraube 22, damit die Befestigungsschraube nötigenfalls später ohne Beschädigung wieder freigelegt werden kann. In einer bevorzugten Ausführung ist an der Spitze des Verschlusszapfens 23 ein Abstandselement 24 angeordnet, das aus einem anderen Material (z.B. Silikon) als der Verschlusszapfen 23 besteht und/oder eine kleinere Querschnittsfläche als der Verschlusszapfen 23 aufweist. Wird der Verschlusszapfen herausgebohrt, so kann das Abstandselement 24 ohne mechanische Beschädigung der Schraube herausgelöst werden.

Ein bevorzugtes Material für den Block 10 ist Glaskeramik, insbesondere eine Lithiumsilikat-Keramik oder ein anderes Material, das nach dem Formschleifen bei erhöhter Temperatur getempert werden kann und dabei an Festigkeit gewinnt. Andere Nachbehandlungsmethoden zur Erhöhung der Festigkeit nach dem Formschleifen können auch eingesetzt werden. Block 10 kann beispielsweise aber auch aus Komposit, Feldspatkeramik oder Leuzitglaskeramik sein.

Bei Verwendung eines ausreichend festen Materials für den Block 10, kann der Implantat-Anschlussteil 14 aus dem gleichen Material wie der Block 10 bestehen und ist vorzugsweise einstückig aus diesem ausgeformt.

Bevorzugt wird der Implantat-Anschlussteil 14 jedoch separat gefertigt, so dass er ohne grossen Aufwand in der nötigen Genauigkeit hergestellt werden kann. Insbesondere wenn der Implantat-Anschlussteil 14 aus Metall ist, kann er in einfacher Weise präzis gefertigt werden und weist dennoch die nötige Bruchfestigkeit auf. Nach seiner Herstellung wird der Implantat-Anschlussteil 14 permanent im Block 10 verankert.

Der Implantat-Anschlussteil 14 des in Fig. 5 - 8 dargestellten Rohlings 10 bildet nur einen unwesentlichen Teil der gingiva-seitigen Oberfläche der fertigen Krone. Wie in Fig. 10 dargestellt, kann Implantat-Anschlussteil 14 jedoch auch eine grössere gingivaseitige Basisplatte der Krone bilden. Hierzu besitzt er eine vorpolierte bzw. vorglasierte, konvex gekrümmte Aussenfläche 26, die vorzugsweise über die zweite Oberfläche 13 vorsteht, so dass weniger Material formgeschliffen werden muss, und die nicht bearbeitet wird. Zudem hat die glatte vorpolierte bzw. glasierte Aussenfläche 26 den Vorteil, dass sie gewebefreundlich ist.

Bei der Anwendung der Ausführung nach Fig. 10 wird vor dem Einsetzen der Krone ein Gingiva-formendes Abutment auf das Implantat aufgesetzt, das eine Form entsprechend der Aussenfläche 26 besitzt und während dem Heilungsprozess diese Form der Gingiva aufprägt. Sodann wird das Gingiva-formende Abutment entfernt und die Krone wird eingesetzt. Dabei schmiegt sich die Gingiva der Aussenfläche 26 gut an.

In dem zu Fig. 3 und 4 beschriebenen Ausführungsbeispiel der Erfindung wurden die Formdaten für die zu schaffende Zahnkrone durch Messung im Mund des Patienten ermittelt. Die Erfindung ist jedoch auch geeignet zur Anwendung im zahntechnischen Labor. Hierzu kann z.B. zuerst ein konventioneller Abdruck der zu restaurierenden Zahnreihe des Patienten genommen und hieraus durch Formguss ein Modell 30 geschaffen werden, wie es in Fig. 11 dargestellt ist. Dabei wird in konventioneller Weise ein Übertragungsabutment in den Abdruck aufgenommen und damit ein entsprechendes Implantat 2' im Modell 30 positioniert. Das so erstellte Modell 30 gibt im wesentlichen die Situation nach Fig. 1 und 2 wieder.

Aus dem Modell 30 können sodann die Formdaten für das Formschleifen des Blocks 10 gewonnen werden. In einer möglichen Ausführung wird zu diesem Zweck ein Aufwachs-Abutment 29 bereitgestellt, welches einen Körper 31 z.B. aus Wachs oder einem anderen, mit Wachs gut verbindbaren Material aufweist, sowie - ähnlich dem Rohling - einen Implantat-Anschlussteil 32. Letzterer passt auf das Implantat 2' und kann mit einer Schraube 22 in diesem fixiert werden. Zum Einführen und Bedienen der Schraube 22 ist im Körper 31 ein Kanal 33 vorgesehen.

Der Zahntechniker befestigt sodann das Aufwachs-Abutment 29 am Implantat 2' des Modells 30 und wachst in an sich bekannter Weise eine Zahnkrone 34 auf, die die Form des zu restaurierenden Zahns besitzt. Sodann wird die Zahnkrone 34 durch Lösen der Schraube 22 aus dem Modell 30 entfernt und in ein optisches oder mechanisches Abtastgerät eingesetzt, wo ihre Form aufgenommen wird. Dabei wird insbesondere auch die Position des Kanals 33 und des Implantat-Anschlussteils 32 gemessen. Die so gewonnenen Daten können, wie im oben beschriebenen Verfahren, zum Formschleifen des Blocks 10 verwendet werden.

Die Rohlinge gemäss Fig. 5 - 8 und 10 sind mit einem Halter 11 versehen, mit welchem sie in einem Bearbeitungswerkzeug befestigt werden können. Es gibt jedoch auch Bearbeitungswerkzeuge, in denen der Block 10 ohne Halter 11 eingespannt werden kann. Für derartige Bearbeitungswerkzeuge können die Blöcke 10 ohne Halter 11 angeboten werden. Beim Befestigen des Blocks 10 im Bearbeitungswerkzeug ist jedoch zu beachten, dass die Befestigung über eine oder mehrere Oberflächenbereiche des Blocks geschieht, die quer zur Oberfläche 13 liegen, so dass der Bereich der zweiten Oberfläche um den Implantat-Anschlussteil 14 sowie der entsprechende Bereich auf der gegenüberliegenden Seite frei bleiben. Beispielsweise kann der Block an den Oberflächen 12, 12a, 12b und 12c (Fig. 6) in Befestigungsbacken des Bearbeitungswerkzeugs eingespannt werden. Da die Oberfläche 13 im Bereich des Implantat-Anschlussteils 14 sowie der entsprechende Bereich der gegenüberliegenden Seite frei bleiben, kann das Restaurat in der gewohnten Weise erstellt werden.

Um die Ausführung der Erfindung zu vereinfachen, kann dem Praktiker ein Teilesatz angeboten werden, welcher einen oder mehrere Rohlinge enthält. Zudem kann dem Teilesatz der Referenzteil 20 beigefügt sein, sowie einer oder mehrere der Verschlusszapfen 23 und/oder ein der Aussenfläche 26 angepasstes Abutment zum Formen der Gingiva während dem Heilprozess und/oder eine Auswahl der oben beschriebenen Aufwachs-Abutments 31. Der Teilesatz kann auch Schrauben und einen passenden Schraubenzieher enthalten.

## Patentansprüche

1. Rohling zur Herstellung einer Zahnrestauration mit einem Block (10) aus mechanisch bearbeitbarem Material und einem mit dem Block (10) verbundenen Halter (11) zum Befestigen in einem Bearbeitungswerkzeug, wobei am Block (10) ein Implantat-Anschlussteil (14) angeordnet ist, in welchem eine Implantat-Fixtur zur Befestigung an einem Implantatkopf ausgeformt ist, **dadurch gekennzeichnet, dass** der Halter (11) an mindestens einer ersten Oberfläche (12) des Blocks (10) angeordnet ist und der Implantat-Anschlussteil (14) an einer zweiten Oberfläche (13), wobei die erste und die zweite Oberfläche (13) im wesentlichen rechtwinklig oder quer zueinander angeordnet sind.

2. Rohling nach Anspruch 1, wobei der Implantat-Anschlussteil (14) aus einem anderen Material als der Block (10) ist, und insbesondere dass der Implantat-Anschlussteil (14) eine höhere Bruchfestigkeit als der Block (10) aufweist.

3. Rohling nach einem der vorangehenden Ansprüche, wobei der Implantat-Anschlussteil (14) ein separat vom Block (10) fertigbarer, im Block (10) verankerter Teil ist.

4. Rohling nach einem der vorangehenden Ansprüche, wobei der Implantat-Anschlussteil (14) über die zweite Oberfläche (13) heraussteht.

5. Rohling nach einem der vorangehenden Ansprüche, wobei zur Aufnahme einer Befestigungsschraube zur Befestigung am Implantatkopf ein Kanal (16) vorgesehen ist, der sich vom Implantat-Anschlussteil (14) quer durch den Block (10) erstreckt, wobei der Kanal (16) im wesentlichen parallel zur ersten Oberfläche (13) verläuft.

6. Rohling nach einem der vorangehenden Ansprüche, wobei der Block (10) eine Lithiumsilikat-Keramik aufweist oder aus einer solchen besteht, und insbesondere wobei der Implantat-Anschlussteil (14) einstückig mit dem Block (10) ausgeführt und ebenfalls aus der Lithiumsilikat-Keramik ist oder diese aufweist.

7. Rohling nach einem der Ansprüche 1 bis 5, wobei der Block (10) aus Komposit, Feldspatkeramik oder Leuzitglaskeramik besteht oder mindestens eines dieser Materialien aufweist.

8. Rohling nach einem der vorangehenden Ansprüche, wobei der Implantat-Anschlussteil (14) eine konvex gekrümmte Aussenfläche (26) aufweist, und insbesondere dass die Aussenfläche (26) über die zweite Oberfläche (13) vorsteht.

9. Teilesatz zur Herstellung einer Zahnrestauration mit mindestens einem Rohling nach einem der vorangehenden Ansprüche.

10. Teilesatz nach Anspruch 9, wobei er weiter einen Referenzteil (20) aufweist, welcher am Implantat-Anschlussteil (14) in definierter Position befestigbar ist zur mechanischen Positionsbestimmung des Implantat-Anschlussteils (14).

11. Teilesatz nach einem der Ansprüche 9 oder 10, wobei zur Aufnahme einer Befestigungsschraube zur Befestigung am Implantatkopf ein Kanal (16) vorgesehen ist, der sich vom Implantat-Anschlussteil (14) quer durch den Block (10) erstreckt, wobei der Kanal (16) im wesentlichen parallel zur ersten Oberfläche (13) verläuft, und wobei der Teilesatz weiter einen Verschlusszapfen (23) aufweist, der in den Kanal (16) einführbar und dort befestigbar ist, und insbesondere wobei an einer Spitze des Verschlusszapfens ein Abstandselement (24) angeordnet ist, welches aus einem anderen Material als der Verschlusszapfen (23) ist und/oder eine kleinere Querschnittsfläche als der Verschlusszapfen (23) aufweist.

12. Verfahren zur Herstellung einer Zahnrestauration aus einem Block (10) aus mechanisch bearbeitbarem Material, wobei am Block (10) ein Implantat-Anschlussteil (14) angeordnet ist, in welchem eine Implantat-Fixtur zur Befestigung an einem Implantatkopf ausgeformt ist, und wobei der Block (10) in einem Bearbeitungswerkzeug befestigt wird, **dadurch gekennzeichnet, dass** der Block (10) an mindestens einer ersten Oberfläche (12) mit dem Bearbeitungswerkzeug verbunden wird, wobei der Implantat-Anschlussteil (14) an einer zweiten Oberfläche (13) angeordnet ist, die im quer zur ersten Oberfläche (12) angeordnet ist, derart, dass die zweite Oberfläche (13) zumindest in einem Bereich um den Implantat-Anschlussteil (14) frei bleibt.

13. Verfahren nach Anspruch 12, weiter umfassend die Schritte
Ausmessen der Position des Implantat-Anschlussteils (14) durch das Bearbeitungswerkzeug und
Bearbeiten des Blocks derart, dass eine vorgegebene Restaurationsoberfläche relativ zur Position des Implantat-Anschlussteils (14) gebildet wird.

14. Verfahren nach einem der Ansprüche 12 oder 13, wobei nach dem Bearbeiten des Blocks (10) der bearbeitete Block (10) zur Erhöhung der Bruchfestigkeit nachbehandelt, insbesondere getempert wird, und insbesondere wobei der Block (10) aus einer Glaskeramik, insbesondere einer Lithiumsilikat-Keramik ist.

15. Verfahren nach einem der Ansprüche 12 bis 14, weiter umfassend die folgenden Schritte
Ausmessen einer Position und Lage eines Implantatkopfs (3), indem ein Hilfskörper (4) am Implantatkopf (3) so befestigt wird, dass der Hilfskörper (4) in vorgegebener Lage zum Implantatkopf (3) steht, und indem die Position des Hilfskörpers (4) ausgemessen wird, und
Bearbeiten des Rohlings unter Berücksichtigung der Position und Lage des Implantatkopfs (3).
